# EUROPEAN PATENT APPLICATION

(11) **EP 1 131 998 A1**
(43) Date of publication of application: **12.09.2001**
(21) Application number: 00104467.6
(22) Date of filing: 08.03.2000
(51) Int. Cl.: A01N 1/02

(54) **Cell-cryopreservation method**

(71) Applicant: DIRECTOR-GENERAL OF NATIONAL INSTITUTE OF ANIMAL INDUSTRY, MINISTRY OF AGRICULTURE, FORESTRY AND FISHERIES, Inashiki-gun, Ibaraki 305-0901 (JP); Director of Institute of Genetics and Animal Breeding, Polish Academy of Sciences, 05-551 Mrokow (PL)
(72) Inventor: Izaike, Yoshiaki, Tsukuba-shi, Ibaraki 305-0031 (JP); Shimizu, Manabu, Tsukuba-shi, Ibaraki 305-0031 (JP); Papis, Krzysztof Antoni, 05-551 Mrokow (PL)
(74) Representative: Behnisch, Werner, Dr.

(57) **Abstract**

A method of cryopreserving a cell or cells wherein the cell or cells are dripped into liquid nitrogen in the presence of glass-forming fluid is provided.

## Description

### Field of the Invention

The present invention relates to a cell-cryopreservation method.

### Description of Related Art

One example of conventional cell-cryopreservation methods is slow-freezing method comprising the steps of equilibrating cells with a low concentration of a cryoprotectant such as glycerol or dimethylsulfoxide, filling the mixture in a vessel such as a glass ampoule or a plastic straw and then gradually cooling the cells. Another example is vitrification method comprising the steps of introducing cells into a vessel together with high concentration of a cryoprotectant and quickly cooling the cells to liquid nitrogen temperature for preservation.

Slow-freezing methods are commonly used for typical cultured cells because of the following advantages: chemically less toxic to cells due to use of a low concentration of a cryoprotectant; physically less stressful to cells; and involving an easy freezing-step. However, such slow-freezing methods also have several disadvantages: cells are damaged by cryohydrates produced by the formation of ice crystals in the extracellular medium for cell dehydration; an apparatus for controlling the cooling rate is required; and those are not suitable for preservation of cold-sensitive cells since the processes slowly undergo through low temperature region. Thus, such methods are not suitable for cryopreservation of, for example, unfertilized bovine oocyte.

Vitrification methods comprise the steps of filling cells in a vessel together with high concentration solution and then quickly cooling the cells to liquid nitrogen temperature to vitrify the cells for preservation without forming neither intra- nor extracellular cryohydrates. This kind of methods have recently received considerable attention because of the following advantages: cells will not be damaged by cryohydrates; being applicable to cold-sensitive cells since the processes undergo very quickly through low temperature region; and no requirement of any additional special apparatus. However, since they require use of glass-forming fluid containing a high concentration of a cryoprotectant they still have several problems such as: cells are physically damaged by the osmotic pressure difference produced when cells are added to glass-forming fluid or glass-forming fluid is removed; and cells may be killed by chemical toxicity of high concentration solution.

Moreover, in conventional vitrification methods cooling step is performed by filling cells in a vessel such as a glass ampoule or plastic straw and then placing the vessel in liquid nitrogen, resulting in relatively slow cooling rate.

### Summary of the Invention

The object of the present invention is to provide a cell-cryopreservation method.

The present inventors have found, after intensive studies, that cells can be cryopreserved by dripping cells directly into liquid nitrogen in the presence of a small amount of glass-forming fluid without filling cells in a vessel, and finally completed the present invention.

In other words, the present invention relates to a method of cryopreserving a cell or cells wherein the cell or cells are dripped into liquid nitrogen in the presence of glass-forming fluid. Examples of cells are animal or human germ and somatic cells.

Hereinafter the present invention will be described in detail.

### Detailed Description of the Invention

Cryopreservation method of the present invention is characterized in that cell-containing glass-forming fluid (liquid droplet) is directly dripped into liquid nitrogen without filling the glass-forming fluid in a vessel so that cooling step is performed such that the glass-forming fluid will contact with the liquid nitrogen directly. The present method can be referred to as "microdroplet method" or "vitrification method".

Cells which can be preserved by using the vitrification method of the present invention are not limited to but include germ or somatic cells of animals such as bovine, goat, sheep, pig, mouse, rat or rabbit (either experimental or domestic), and human germ or somatic cells.

These cells can be obtained by any conventional method. As an example of germ cell, an unfertilized bovine oocyte can be collected from a follicle on oocyte surface by aspiration using a syringe. As another example, embryo can be obtained by *in vitro* fertilization of an unfertilized oocyte with sperm followed by culture. Alternatively, an embryo can also be obtained by surgical or non-surgical perfusion of animal uterus which has been superovulated with hormones. A "germ cell" herein refers to an unfertilized oocyte, a sperm, or a cell or embryo at day 0-10 after fertilization (the 1-200-cell stage). In the present invention, an unfertilized oocyte or a cleavage-stage-embryo from bovine, an unfertilized oocyte or an embryo from pig, or an unfertilized mouse oocyte, all of which preservations were difficult according to conventional methods, may be preferably used.

As to somatic cell, cutaneous cells can be obtained by collecting skin from an animal and then dispersing the tissues with, for example, collagen.

Obtained cells may be added to an appropriate cell culture solution (such as fetal bovine serum-containing H-TCM199, RPMI1640 or DMEM) or buffer (such as PBS) and then dipped in glass-forming fluid. A "glass-forming fluid" refers to a liquid containing cryoprotectant capable of preventing ice crystal formation as well as saccharide capable of promoting cell dehydration and protecting cell membranes, which has a certain concentration sufficient to avoid cryohydrate formation even in liquid nitrogen. Typically, a mixture of 5.5M ethylene glycole and 1M sucrose, or 40% ethylene glycole, 18% Ficoll and 0.3M trehalose may be used.

Next, a small amount of glass-forming fluid containing cells is aspirated by a pipette and dripped directly into liquid nitrogen without transferring into a vessel. "Without transferring into a vessel" herein refers to contacting cell-containing glass-forming fluid directly with liquid nitrogen, not to plunging a vessel filled with cell-containing glass-forming fluid in liquid nitrogen. In this case, cell-containing glass-forming fluid may be dripped and frozen in a tank containing liquid nitrogen, though the fluid may be preferably dripped into a tube or cryotube (desirably labeled with date, cell type and others for easy identification of cells) filled with liquid nitrogen, and the tube may be preserved in the tank containing liquid nitrogen again for better preservation of cells. A "small amount of" herein refers to an amount to such an extent that cells can be frozen instantaneously when the cell are dripped into liquid nitrogen. The amount is particularly 1-10 µl, and preferably 4-8 µl. The number of cells contained in such small amount of glass-forming fluid is 1-10,000,000 cells/ µl fluid, and preferably 1-100,000 cells/ µl fluid.

The cryopreserved cells can be warmed by any conventional method (at 37°C, for example). Subsequently, the cells are developed and differentiated by culture in a typical medium for cell culture at 37-39°C in the presence of 5% CO₂.

The present invention will be described in detail by means of Examples below. It should be noted that these Examples are not intended to limit the technical scope of the present invention.

### Examples

### Example 1: Preservation of in vitro matured bovine oocyte

### 1. Sample

*In vitro* matured bovine oocytes, which are known to have low regenerating rate after warmed, were used in the present Example.

### 2. Preparation of in vitro matured bovine oocyte

Oocytes are collected from bovine ovaries obtained from a meat processing plant, and matured *in vitro* in solution containing H-TCM199 (GIBCO), 5% fetal bovine serum (FBS), FSH (follicle stimulating hormone; DENKA SEIKEN Co., Ltd.) and E2 (Estradiol 17- β; SIGMA) at 38.5°C for 21-24 hours in the presence of 5% CO2, followed by removal of cumulus cells.

### 3. Vitrification method for preservation

The above-described oocytes were equilibrated in 3% ethylene glycole solution for 12-15 minutes, dipped in glass-forming fluid (5.5M ethylene glycole+1M sucrose) for 30 seconds, and dripped into liquid nitrogen together with a small amount of the glass-forming fluid (4-8 µl). These droplets were preserved in a cryotube for 1-7 days. Warming of the vitrified droplets and removal of glass-forming fluid were performed by adding the droplets to 199 culture solution supplemented with 20% fetal bovine serum.

Vitrification of cells in a straw was performed by equilibrating oocytes in 10% ethylene glycole solution for 10 minutes, dipping in glass-forming fluid (40% ethylene glycol+18% Ficoll+0.3M trehalose), filling in a straw, plunging the straw in liquid nitrogen after 2 minutes, and preserved for 1-7 days. Warming and removal of glass-forming fluid were performed by holding the straw in air for 10 seconds, immersing into water at 20°C to warm the liquid, taking out the oocytes into 0.5M trehalose solution, and holding the oocytes therein to remove glass-forming fluid.

Other oocytes without any freezing treatment is used as controls.

### 4. Judgement of Viability

The warmed oocytes were fertilized *in vitro* and the developments thereafter were monitored to determine their viability.

### 5. Result

For *in vitro* matured bovine oocytes preserved after vitrification according to the microdroplet method of the present invention, 75.9% (41/54) were cleaved and 29.6% (16/54) were developed into blastocysts stage embryo after *in vitro* fertilization (see Table 1). For control oocytes, 88.7% (47/53) were cleaved and 41.5% (22/53) were developed into blastocysts after fertilized, showing that the results for controls are not significantly different from those for vitrified oocytes, statistically. Accordingly, vitrified oocytes can be determined to have almost the same viability as that of the controls even after warmed. On the other hand, for oocytes preserved after vitrification in a straw, 14.8% (12/81) were cleaved and 1.2% (1/81) was developed into blastocysts after fertilization. These results were lower than those obtained for microdroplet method (see Table 1). Thus, the method of the present invention (microdroplet method) was confirmed to provide better preservation and higher viability of cells after warming when compared to the conventional method (straw method).

**Table 1**

| | Cleavage rate (%) | Development rate to the blastocyst stage (%) |
|---|---|---|
| Microdroplet method (n=54) | 75.9 | 29.6 |
| Straw method (n=81) | 14.8 | 1.2 |
| Control (without cryopreservation) (n=53) | 88.7 | 41.5 |

### Example 2: Preservation of in vitro fertilized bovine embryo at day 3

### 1. Sample

*In vitro* fertilized bovine oocytes at day 3 (*in vitro* fertilization = day 1, the 8-16-cell stage), which are known to be relatively difficult to be preserved according to conventional vitrification method , were used in the present Example.

### 2. Preparation of embryo

Oocytes were collected from bovine ovaries obtained from a meat processing plant, matured/fertilized *in vitro* by a conventional method, and cultured in solution containing CR1aa and linoleic acid albumin at 38.5°C, 5%O₂, 5% CO₂, 90% N₂ for three days. Embryos which had been developed to the 8-16-cell stage were used in the following test.

### 3. Vitrification method for preservation

The above-described embryos were equilibrated in 2% ethylene glycol solution for 12-16 minutes, dipped in glass-forming fluid for 60 seconds, and dripped into liquid nitrogen. Portion of the embryos were filled in 0.25cc plastic straws which were then plunged in liquid nitrogen. The vitrified liquids were warmed at 37°C and glass-forming fluids were removed in 199 culture solution supplemented with 20% fetal bovine serum. Embryos without any freezing treatment were used as controls.

### 4. Judgement of Viability

Warmed embryos were cultured for 6 days and their development rates to the blastocyst stage and the hatched blastocyst stage were monitored to determine the viability.

### 5. Result

For embryos vitrified by the microdroplet method of the present invention, 71.2% (37/52) were developed to the blastocyst stage while 50.0% (26/52) were developed to the hatched blastocyst stage (see Table 2). For straw method, 43.9% (18/41) were developed to the blastocyst stage while 17.1% (7/41) to the hatched blastocyst stage. For control embryos, 74.3% (29/39) were developed to the blastocyst stage while 51.3% (20/39) were developed to the hatched blastocyst stage. Thus, the method of the present invention (microdroplet method) was confirmed to provide significantly higher development rate when compared with conventional straw method. *In vitro* fertilized bovine embryos at day 3 showed sufficient viability which was not so inferior to that of control embryos (see Table 2).

**Table 2**

| | Development to the blastocyst stage (%) | Development to the hatched blastocyst stage (%) |
|---|---|---|
| Microdroplet method (n=52) | 71.2 a | 50.0 a |
| Straw method (n=41) | 43.9 b | 17.1 b |
| Control(n=39) | 74.3 a | 51.3 a |
| (significantly different when ab=P<0.05) | | |

The present invention provides a cell-cryopreservation method. The present method enables to cryopreserve cells that have been difficult to preserve by freezing according to conventional vitrification method. The present invention also provides higher cell viability after warming, and is thus very useful.

All publications, patents and patent applications cited herein are incorporated by reference in their entirety.

## Claims

1. A method of cryopreserving a cell or cells wherein the cell or cells are dripped into liquid nitrogen in the presence of glass-forming fluid.

2. The method of claim 1 wherein said cell or cells are germ or somatic cells derived from animals or human beings.
